**Europäisches Patentamt**

**European Patent Office**

**Office européen des brevets**

(19)

(11) Veröffentlichungsnummer: **0 276 802 B1**

## (12) EUROPÄISCHE PATENTSCHRIFT

(45) Veröffentlichungstag der Patentschrift: **20.05.92**

(21) Anmeldenummer: **88101046.6**

(22) Anmeldetag: **26.01.88**

(51) Int. Cl.5: **B24B 19/12**, G05B 19/18, B24B 49/02

(54) **Verfahren zum Schleifen von zwei oder mehr Nocken einer Nockenwelle.**

(30) Priorität: **29.01.87 DE 3702594**

(43) Veröffentlichungstag der Anmeldung:
**03.08.88 Patentblatt 88/31**

(45) Bekanntmachung des Hinweises auf die
Patenterteilung:
**20.05.92 Patentblatt 92/21**

(84) Benannte Vertragsstaaten:
**CH DE FR GB IT LI**

(56) Entgegenhaltungen:
**DE-A- 2 242 815**
**DE-C- 2 621 430**
**GB-A- 1 269 999**
**US-A- 3 919 614**
**US-A- 4 061 952**

**PATENT ABSTRACTS OF JAPAN, Band 2, Nr. 28 (M-77)[1448], 22. Februar 1978; & JP - A - 52 144 895 (TOYODA KOKI) 02.12.1977**

**WERKSTATT UND BETRIEB, Band 118, Nr. 8, 1985, Seiten 443-448, München; H.J. WEDE-NIWSKI "Prozessrechnergesteuertes Produktions-Nockenschleifen"**

**WERKSTATT UND BETRIEB, Band 119, Nr. 8, 1986, Seiten 655-660, München; H.J. WEDE-NIWSKI "Rechnergestützte Programmierung bei CNC-Nockenform-Schleifen"**

**WERKSTATTSTECHNIK, Band 76, Nr. 6, 1986, Seiten 343-348, Berlin; J. BRILL et al.: "CNC-gesteuertes Nockenschleifen"**

**PATENT ABSTRACTS OF JAPAN, Band 1, Nr. 105 (M-77)[3106], 16. September 1977; & JP - A - 52 44493 (TOKYO SEIMITSU) 07.04.1977**

(73) Patentinhaber: **Fortuna-Werke Maschinenfabrik GmbH**
**Pragstrasse 140**
**W-7000 Stuttgart 50(DE)**

(72) Erfinder: **Wedeniwski, Horst Josef, Dr.**
**Beutelsbacher Strasse 8/1**
**W-7064 Remshalden-Grunbach(DE)**

(74) Vertreter: **Witte, Alexander, Dr.-Ing.**
**Witte, Weller & Gahlert Patent- und Rechtsanwälte Augustenstrasse 7**
**W-7000 Stuttgart 1(DE)**

# Beschreibung

Die Erfindung betrifft ein Verfahren zum Schleifen von zwei oder mehr Nocken einer Nockenwelle mit den Verfahrensschritten:

- Einspannen der Nockenwelle in eine Aufspannung zwischen einem um eine erste Achse drehbaren Mitnehmer eines Werkstückspindelstocks und einem Reitstock;
- Drehen der Nockenwelle in definierter Drehwinkel-Zeitabhängigkeit;
- Verschieben einer rotierenden Schleifscheibe in Richtung einer zweiten Achse, die auf der ersten Achse senkrecht steht, auf einen ersten zu schleifenden Nocken zu;
- Einstellung des Drehwinkels und des Verschiebeweges der Schleifscheibe in Abhängigkeit von in einer numerischen Steuereinheit vorgegebenen Polarkoordinaten einer Soll-Kontur des Nockens, während sich die Schleifscheibe in Eingriff am Nocken befindet;
- Erfassen einer Abweichung von einem Verfahrens-Soll-Wert;
- Korrigieren des vorgegebenen Verschiebeweges um einen der gewichteten Abweichung entsprechenden Korrekturwert.

Ein Verfahren der vorstehend genannten Art ist aus der DE-PS 26 21 430 bekannt.

Bei dem bekannten Verfahren wird auf nicht näher beschriebene Weise der Ist-Durchmesser der Schleifscheibe ermittelt und der ermittelte Meßwert einer elektronischen Steuereinheit zugeführt, die aus der Differenz des ursprünglich einprogrammierten Durchmessers der Schleifscheibe und des tatsächlich ermittelten Durchmessers ein Korrektursignal sowohl für den Verschiebeweg des Schleifschlittens wie auch für die Drehwinkelstellung der Nockenwelle bildet.

Bei dem bekannten Verfahren werden somit nur diejenigen Störeinflüsse berücksichtigt, die sich dadurch ergeben, daß die Schleifscheibe im Verlaufe der Bearbeitungsvorgänge sowohl einer Abnutzung unterliegt wie auch einer weiteren Durchmesserverringerung infolge von Abrichtvorgängen, wie sie üblicherweise in bestimmten Zeitabständen bei Schleifscheiben zum Anschärfen der Oberfläche vorgenommen werden. Andere Verfahrensgrößen, die zu Abweichungen der Ist-Kontur der geschliffenen Nocken von einer Soll-Kontur führen, bleiben hingegen unbeachtet. Das bekannte Verfahren erfordert ferner, daß die Schleifscheibe zum Erfassen ihres Durchmessers angehalten wird, was einen Zeitverlust beim Bearbeiten der Nocken einer Nockenwelle mit sich bringt.

Aus der DE-Z "Werkstatt und Betrieb", 118 (1985), Seiten 443 bis 448, ist ein Verfahren zum prozeßrechnergesteuerten Produktions-Nockenschleifen bekannt. Bei diesem bekannten Verfahren wird zunächst ein Programm zur Steuerung der CNC-Schleifmaschine erstellt, das die Geometriebeschreibung der zu produzierenden Werkstücke enthält. In einem Probelauf wird dann mittels des so erstellten Programms ein Werkstück, beispielsweise ein Nocken, geschliffen. Der so geschliffene Musternocken wird dann hinsichtlich seiner Formfehler, d.h. hinsichtlich seiner Abweichungen von einer theoretisch vorgegebenen Geometrie der Nockenerhebung, ausgemessen, und es wird ein Meßprotokoll erstellt, das die Abweichung der Nockenform von einer idealen Nockenform zeigt. Absolute Abmessungen des Nockens gehen in diese Messung nicht ein, weil lediglich Abweichungen von einer idealen Nockenform ermittelt werden. Diese Abweichungen werden herangezogen, um das erstellte Programm zu korrigieren, und es wird dann ggf. in einem zweiten Muster-Schleifvorgang verifiziert, ob das korrigierte Programm nunmehr zur Erzeugung von Nocken mit hinreichender Annäherung an eine ideale Nockenform führt.

Sobald sich zeigt, daß die Abweichungen von der idealen Nockenform innerhalb vorgegebener Toleranzen liegen, wird das in dieser Weise einmal oder mehrmals korrigierte Programm zum Serieneinsatz freigegeben.

Dieses bekannte Verfahren hat damit zwar den Vorteil, letztendlich zu Nocken mit nahezu idealer Nockenform zu führen, es bleiben jedoch zwei Punkt unberücksichtigt.

Zum einen vermag das bekannte Verfahren nicht sicherzustellen, daß die mit idealer Nockenform erzeugten Nocken auch die gewünschten absoluten Abmessungen aufweisen, weil bei der Programmkorrektur, wie erwähnt, nur relative Abweichungen von einer Idealform korrigiert wurden. Zum anderen ist das bekannte Verfahren nicht in der Lage, Änderungen zu berücksichtigen, die sich beim Serieneinsatz der Schleifmaschine erst ergeben.

Weitere ähnliche Verfahren sind noch in der DE-Z "Werkstatt und Betrieb", 119 (1986), Seiten 655 bis 660, und DE-Z "wt Zeitschrift für industrielle Fertigung", 76 (1986), Seiten 343 bis 348, beschrieben. Auch bei diesen Verfahren zum CNC-Schleifen von Nocken wird allenfalls eine relative Abweichung von einer idealen Nockenform berücksichtigt und auch dies nur im Rahmen des "Programmierplatzes", d.h. im Rahmen der Vorbereitung eines erst für den Serieneinsatz vorgesehenen Programms.

Aus dem Dokument GB-A-1 269 999 ist eine Werkzeugmaschine bekannt, bei der mittels eines drehstahlähnlichen Werkzeugs Bohrungen großen Durchmessers in Werkstücke eingebracht werden können. In diesem Zusammenhang soll bei der bekannten Werkzeugmaschine berücksichtigt werden, daß sich Fehler in der Positionierung des Werkzeugs infolge von mechanischen Verbiegungen oder Temperaturschwankungen einstellen können. Zu diesem Zwecke wird mit der bekannten Werkzeugmaschine zunächst eine Probebohrung eingebracht. In der Probebohrung werden dann Absolutwerte der Abmessungen des bearbeiteten Werkstücks festgestellt und die so festgestellten, d.h. gemessenen Absolutwerte werden dann als Zahlen in Bezug zu Soll-Werten gesetzt. Aus der so bestimmten Abweichung werden dann Korrekturwerte für eine numerische Steuerung hergeleitet. Allerdings erfolgt diese Korrektur Punkt für Punkt, d.h., daß jeder einzelne Koordinatensatz eines jeden vom Werkzeug anzufahrenden Punktes korrigiert wird.

Aus dem Dokument US-A-3 919 614 ist eine Schleifmaschine zum Schleifen von Nocken einer Nockenwelle bekannt. Die bekannte Schleifmaschine arbeitet nach dem früher verwendeten Kopierschleifverfahren. Dabei wird die zu schleifende Nockenwelle auf einem Tisch eingespannt, der um eine zur Wellenachse parallele Achse schwenkbar ist. Zusammen mit der Nockenwelle wird ein sogenannter Meisternocken gedreht, der sich auf einem raumfesten Gegenstück, z.B. einer Rolle, abwälzt und infolge seiner Abwälzbewegung die Nockenwelle um die Schwenkachse verschwenkt. Die Schleifscheibe ist zwar im rechten Winkel auf die Nockenwelle zu verfahrbar, diese Verfahrbewegung dient jedoch ausschließlich einer Zustellung, d.h. einer Erhöhung des Materialabtrages, die Verfahrbewegung der Schleifscheibe hat aber nichts mit der Erzeugung der Nockenform zu tun.

Bei der aus dem zuletzt genannten Dokument US-A-3 919 614 bekannten Schleifmaschine ist nun vorgesehen, einen Meßtaster an den Grundkreis eines Nockens heranzufahren, und zugleich mit einem Referenztaster einen raumfesten Ring an der Einspannung der Nockenwelle abzutasten. Aus den beiden gemessenen Werten wird eine Differenz gebildet und diese Differenz dient dazu, um die Schleifscheibe in ihrer Verfahrrichtung um Verfahrinkremente auf die Nockenwelle zu oder ggf. von dieser weg zu fahren. Alternativ kann die Messung am Grundkreis des Nockens bei weggefahrener Schleifscheibe oder während des Ausfeuerns, d.h. des letzten Bearbeitungsvorganges der Schleifscheibe am Nocken erfolgen.

Aus dem Dokument DE-C-22 42 815 ist noch ein Verfahren zum Schleifen der Nocken von Nokkenwellen bekannt, bei dem ein Meßsystem verwendet wird, das die Funktion eines mechanisch voreinstellbaren Endschalters hat. Wenn der Nokken bei dem bekannten Verfahren weit genug abgeschliffen ist, gibt der Endschalter ein Signal ab, und die Schleifscheibe kehrt in ihre Ausgangsposition zurück. Bei diesem bekannten Verfahren wird daher lediglich das Erreichen eines bestimmten mechanischen Zustandes detektiert, ohne daß in irgend einer Weise ein kontinuierlicher analoger oder digitaler Meßwert erzeugt würde, dessen Absolutbetrag für eine Korrektur der Schleifscheibenbewegung bei später geschliffenen Nocken eingesetzt werden könnte.

Aus der JP-A-52-44493 ist schließlich noch eine Vorrichtung zum Schleifen von Nocken bekannt, bei der Meßtaster an um 180° gegeneinander versetzten Oberflächenpunkten der Nockenkontur angreifen.

Durch eine Zeitsteuerung werden Meßwerte der Meßtaster in dem Augenblick erfaßt und abgespeichert, in dem der erste Meßtaster am unteren Mittelpunkt des Grundkreises und der zweite Maßtaster am oberen Mittelpunkt der Nockenspitze anliegen. Der erste Meßtaster erzeugt somit einen dem Radius des Grundkreises entsprechenden Meßwert, während der zweite Meßtaster einen Meßwert erzeugt, der der Summe des Radius des Grundkreises und des Erhebungswertes entspricht.

Die Meßwerte des zweiten Meßtasters werden in abwechselnder Reihenfolge in einen von zwei Speichern eingelesen. Im Takte der Aufnahme der Meßwerte des ersten Meßtasters werden abwechselnd die Inhalte des genannten Speichers über einen Wechselschalter auf einen ersten Eingang eines Differenzverstärkers geführt, dessen anderer Eingang mit dem Meßwert des ersten Meßtasters beschaltet ist. Am Ausgang des Differenzverstärkers erscheint damit ein Signal, das dem Erhebungswert, nämlich der Differenz der Meßwerte des zweiten und des ersten Meßtasters entspricht. Dieser im Differenzverstärker bestimmte Erhebungswert wird nun in zwei Schwellwertstufen mit einem zulässigen Höchstwert und einem zulässigen Mindestwert verglichen. Bleibt der im Differenzverstärker bestimmte Erhebungswert innerhalb des von den Schwellwertstufen definierten Bereiches, bleibt die bekannte Schaltung inaktiv, während bei einem Auswandern des Erhebungswertes aus dem genannten Intervall die Schnittiefe der Schleifscheibe beeinflußt werden soll, ohne daß hierzu näheres angegeben ist.

Bei der bekannten Vorrichtung wird damit überwacht, ob der jeweils vorliegende Erhebungswert des Nockens innerhalb eines zulässigen Bereiches liegt. Es wird daher nur eine relative Größe überwacht, nicht jedoch eine absolute Abmessung des Nockens. Die bekannte Vorrichtung arbeitet nämlich systematisch unabhängig von der absoluten Größe des Nockens, d.h. unabhängig von dem Grundkreisradius und damit auch unabhängig vom Abstand der Nockenspitze zur Drehachse des Nokkens. Die sog. "absoluten" Formfehler des Nokkens werden daher nicht berücksichtigt.

Der Erfindung liegt demgegenüber die Aufgabe zugrunde, ein Verfahren der eingangs genannten Art dahingehend weiterzubilden, daß zum einen auch die Absolut-Werte der gewünschten Geometrie berücksichtigt werden, zum anderen aber auch Einflüsse in dieser Richtung berücksichtigt werden, die sich erst während des praktischen Einsatzes des Verfahrens in der Serienfertigung von Nockenwellen ergeben.

Diese Aufgabe wird erfindungsgemäß dadurch gelöst, daß

- der Grundkreisdurchmesser oder die Summe von Grundkreisdurchmesser und maximalem Erhebungswert der geschliffenen Kontur des Nockens gemessen wird;
- eine Abweichung zwischen diesem beim Messen ermittelten Meßwert und Soll-Werten ermittelt wird;
- der Soll-Wert des Verschiebeweges um die mit einem Korrekturfaktor gewichtete Abweichung korrigiert wird;
  und
- anschließend ein Zweiter sowie weitere Nocken in derselben Aufspannung geschliffen wird.

Die der Erfindung zugrundeliegende Aufgabe wird auf diese Weise vollkommen gelöst.

Aufgrund des Vermessens der absoluten Abmessungen des ersten geschliffenen Nockens einer Nockenwelle werden nämlich sämtliche Einflüsse berücksichtigt, die zu einem Abweichen der Abmessungen des geschliffenen Nockens von vorgegebenen Werten geführt haben. So ist das erfindungsgemäße Verfahren systematisch unabhängig davon, welche absoluten Dimensionen die angelieferten Nockenwellen-Rohlinge haben, weil die Roh-Nocken nicht nur auf eine ideale Nockenform geschliffen werden, sondern auch mit exakt den vorgegebenen Dimensionen versehen sind. Im Unterschied zum Stand der Technik wird dies dadurch erreicht, daß während des Schleifvorganges selbst, d.h. bei aufgespannter Nockenwelle, der erste geschliffene Nocken hinsichtlich dieser absoluten Abmessungen überprüft wird und ggf. Korrekturwerte für das Schleifen der weiteren Nocken derselben Nockenwelle ermittelt und berücksichtigt werden. Während dieses Meß- und Korrekturvorganges bleibt die Nockenwelle in derselben Aufspannung, was bedeutet, daß das erfindungsgemäße Verfahren ein Inprozeß-Verfahren ist, während die eingangs geschilderten Verfahren des Standes der Technik sich im vorbereitenden Rahmen, d.h. bei der Erstellung des Steuerprogrammes für die Schleifmaschine selbst, abspielten.

Im Gegensatz zu dem eingangs genannten Verfahren werden somit sämtliche Einflußgrößen berücksichtigt, einschließlich der Durchmesservariation der Schleifscheibe, ohne daß hierbei eine Unterbrechung des Bearbeitungsprozesses vorgenommen werden muß, weil übliche Meßtaster sich an eine stillstehende oder langsam rotierende Oberfläche des Nockens problemlos anlegen können, was z.B. bei der Oberfläche einer Schleifscheibe naturgemäß nicht der Fall ist. Die Schleifscheibe braucht daher auch nicht angehalten zu werden, was bei den sehr hohen Drehzahlen moderner Präzisions-Schleifmaschinen zu erheblichen Verzögerungen und Zeitverlusten führen würde.

Schließlich wird erfindungsgemäß der Korrekturwert auf sehr einfache Weise durch Wichten mit einem Korrekturfaktor, d.h. durch eine einfache Produktbildung, ermittelt, und es wird auch nur der Verschiebeweg beeinflußt, während die Drehwinkel-Zeitabhängigkeit (C-Achse) unbeeinflußt bleibt.

Bei einer ersten Variante des erfindungsgemäßen Verfahrens wird der erste Nocken nach vollständigem Schleifen mittels Drehung des Mitnehmers in eine vorbestimmte Drehlage gebracht und die Meßwerte werden in dieser vorbestimmten Drehlage mittels Meßtastern erfaßt.

Diese Maßnahme hat den Vorteil, daß besonders einfache Meßtaster verwendet werden können, die lediglich aus einer vorgegebenen Ruheposition in eine stationäre Meßposition gefahren werden müssen.

Bei einer anderen Variante des erfindungsgemäßen Verfahrens wird der erste Nocken nach vollständigem Schleifen mittels des Mitnehmers um vorzugsweise 360° gedreht, wobei Meßtaster während des Drehens an der geschliffenen Kontur anliegen und die Meßwerte werden aus dem zeitlichen Verlauf der Signale der Meßtaster ermittelt.

Diese Maßnahme hat den Vorteil, daß unter Inkaufnahme etwas höherer Anforderungen an die Meßtaster, die so gelagert sein müssen, daß sie der Kontur des sich drehenden Nockens zu folgen vermögen, eine noch höhere Meßgenauigkeit erzielt wird, weil geringfügige Schwankungen in den Abmessungen der Kontur ausgemittelt werden. Außerdem werden mögliche Fehler ausgemittelt, wie sie bei nicht ganz spielfreien Meßtastern bei stationärer Messung auftreten könnten.

Eine besonders bevorzugte Ausgestaltung des erfindungsgemäßen Verfahrens zeichnet sich dadurch aus, daß der vorgegebene Verfahrweg um den Korrekturwert korrigiert wird, während ein zweiter zu schleifender Nocken und die Schleifscheibe in eine miteinander fluchtende Lage gebracht werden.

Diese Maßnahme hat den Vorteil, daß während des sog. "Taktens" der Nockenwelle, d.h. während des Weiterschaltens von einem ersten bearbeiteten Nocken zu einem zweiten, zu bearbeitenden Nocken die Kompensation durchgeführt wird, so daß insoweit kein Zeitverlust entsteht.

Ausführungsbeispiele der Erfindung sind in der Zeichnung dargestellt und werden in der nachfolgenden Beschreibung näher erläutert. Es zeigen:

Fig. 1 eine stark schematisierte Gesamtansicht einer erfindungsgemäßen Nockenschleifmaschine;

Fig. 2 eine ausschnittsweise Draufsicht auf die Maschine gemäß Fig. 1;

Fig. 3 bis 5 drei Phasenbilder zur Abnahme von Meßwerten an einem Nokken;

Fig. 6 und 7 zwei Flußdiagramme zur Erläuterung von Ausführungsformen erfindungsgemäßer Verfahren;

Fig. 8 ein Weg/Zeitdiagramm zur Erläuterung des Verschiebeweges des Schleifschlittens bei Ausführung des erfindungsgemäßen Verfahrens.

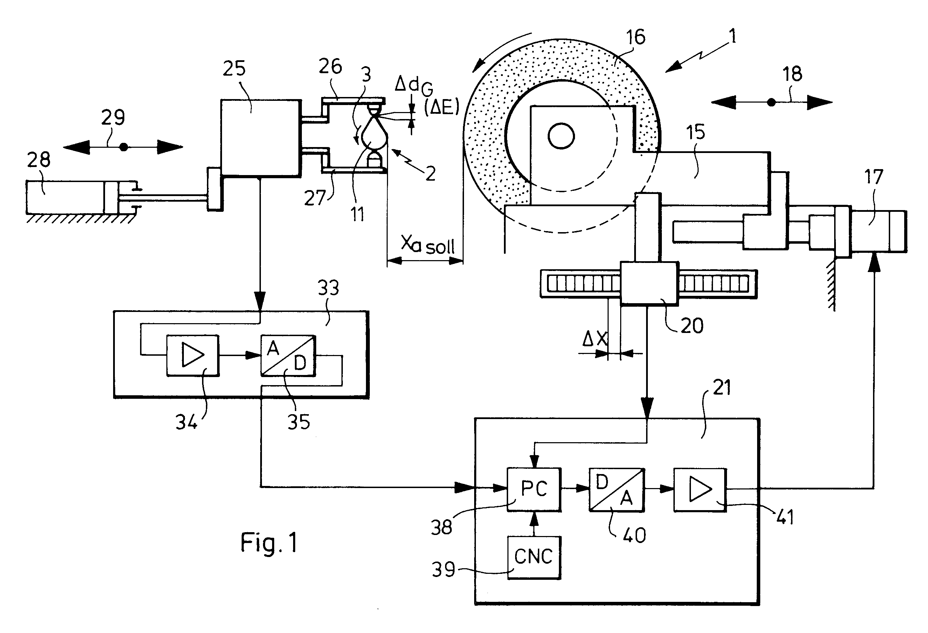

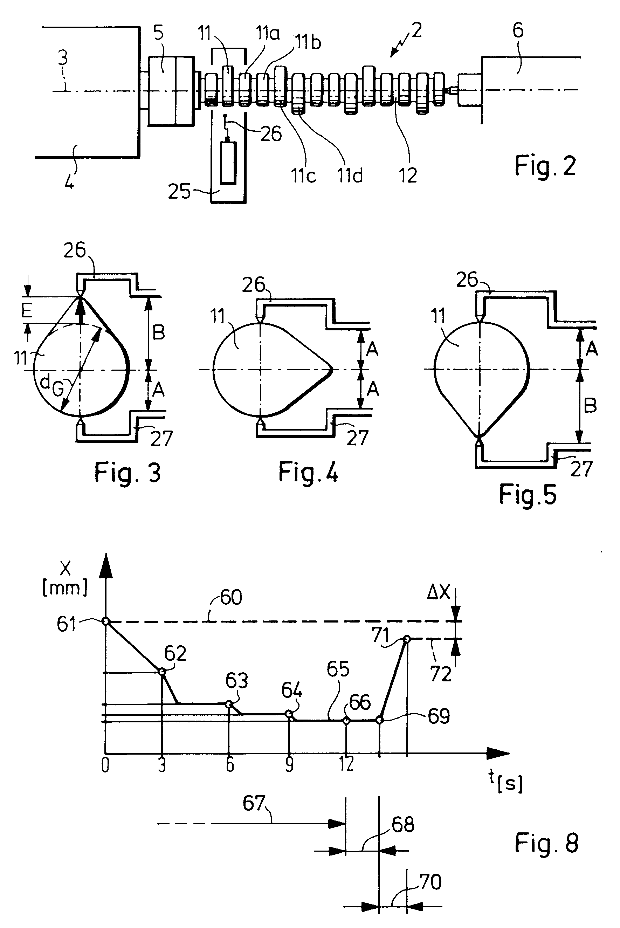

In Fig. 1 und Fig. 2 bezeichnet 1 insgesamt eine Nockenschleifmaschine, mit der Nocken einer Nockenwelle 2 geschliffen werden können. Die Nockenwelle 2 ist um ihre Längsachse, die als C-Achse 3 bezeichnet wird, drehbar. Hierzu ist die Nockenwelle 2 an der einen Seite in einem Mitnehmer 5 eines Werkstückspindelstocks 4 eingespannt, während sie auf der gegenüberliegenden Seite in einem Reitstock 6 gelagert ist.

Die Nocken 11 werden an ihrer zur C-Achse 3 parallelen Oberfläche in einer Kontur geschliffen. Hierzu ist auf einem Schleifschlitten 15 eine rotierende Schleifscheibe 16 angeordnet, wobei der Schleifschlitten 15 mittels eines ersten Antriebssystems 17 entlang einer sogenannten X-Achse 18, die senkrecht zur C-Achse 3 steht, verschiebbar ist.

Mit dem Schleifschlitten 15 ist eine Längenmeßeinrichtung 20 gekoppelt, deren Ausgangssignale einem elektronischen Steuergerät 21 zuführbar sind.

Im Bereich des Nockens 11 befindet sich eine Profilmeßeinrichtung 25 mit beispielsweise einem oberen Meßtaster 26 und einem unteren Meßtaster 27, die an zwei gegenüberliegenden Punkten am Nocken 11 angreifen. Die Meßtaster 26, 27 sind zweckmäßigerweise gekröpft ausgeführt, um eine möglichst raumsparende Bauweise der Profilmeßeinrichtung 25 zu ermöglichen und ohne an jeweils benachbarte Nocken 11a, 11b, 11c, 11d ... oder den Mitnehmer 5 anzustoßen.

Die Profilmeßeinrichtung 25 ist mittels eines zweiten Antriebssystems 28 in einer zur X-Achse 18 parallelen Z-Achse 29 verfahrbar.

Die Ausgangssignale der Profilmeßeinrichtung 25 werden einer Meßeinheit 33 zugeführt und dort über einen Verstärker 34 und einen Analog/Digital-Wandler 35 geleitet, ehe sie dem elektronischen Steuergerät 21 zugeführt werden. Dort gelangen die verstärkten und digitalisierten Meßwerte der Profilmeßeinrichtung 25 auf eine Recheneinheit 38, der außerdem noch die Meßsignale der Längenmeßeinrichtung 20 zugeführt werden. Die Recheneinheit 38 steht ferner in Wirkverbindung mit einer numerischen Steuereinheit 39, in der die Polarkoordinaten einer Sollkontur des Nockens 11 abgelegt sind.

Ein Ausgang der Recheneinheit 38 ist an einen Digital/Analog-Wandler 40 angeschlossen, der über einen Verstärker 41 auf das erste Antriebssystem 17 für den Schleifschlitten 15 einwirkt.

Fig. 3 zeigt in einer vergrößerten Ausschnittsdarstellung eine erste Möglichkeit zur Erfassung charakteristischer Meßgrößen der Kontur des Nockens 11. Bekanntlich besteht eine übliche Kontur eines Nockens aus einem Grundkreis großen Durchmessers und einem Nebenkreis kleineren Durchmessers, wobei Grundkreis und Nebenkreis voneinander beabstandet und über Tangenten an die Kreise miteinander verbunden sind. Als charakteristischer Meßwert ergeben sich dann der Grundkreisdurchmesser $d_G$ und der maximale Erhebungswert E, d.h. der Abstand zwischen dem Grundkreis und dem Scheitelpunkt des Nebenkreises.

Fig. 3 zeigt, daß mit einer Einstellung der Meßtaster 26, 27 Meßwerte A und B erfaßt werden können, die der Hälfte des Grundkreisdurchmessers $d_G$ bzw. der Hälfte des Grundkreisdurchmessers $d_G$ und dem Erhebungswert E entsprechen.

In ähnlicher Weise liefert eine Einstellung gemäß Fig. 4 zwei Meßsignale A, deren Summe dem Grundkreisdurchmesser $d_G$ entspricht. Fig. 5 zeigt hingegen eine dritte Einstellung, bei der sich zu Fig. 3 entgegengesetzte Werte ergeben.

Man kann nun entweder durch statische Messungen nach Fig. 3 oder Fig. 4 die beiden interessierenden Kenngrößen $d_G$ oder $d_G$ und E separat ermitteln, man kann aber auch alle drei Messungen gemäß Fig. 3 bis Fig. 5 durchführen und dann durch entsprechenden Vergleich eventuelle Meßfehler noch ausmitteln.

Es ist ferner möglich, den Nocken 11 langsam rotieren zu lassen, wobei die Meßtaster 26, 27 federnd gelagert sind und dem sich verändernden Anlagepunkten an der Kontur des Nockens 11 folgen. Aus dem zeitlichen Verlauf der Meßwerte der Meßtaster 26, 27 bzw. aus deren Minima und Maxima lassen sich dann die Kenngrößen $d_G$ und $d_G$ und E ermitteln.

Erfindungsgemäß reicht einer der Meßwerte $d_G$ oder $D_G$ und E aus, um die erfindungsgemäße Kompensation durchzuführen.

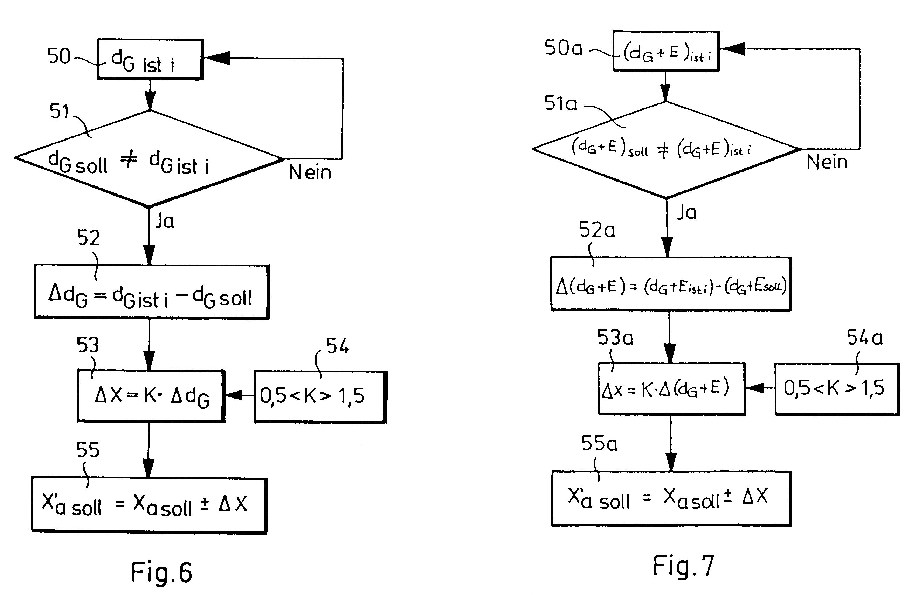

Bei einer ersten Variante wird so vorgegangen, wie dies schematisch im Flußdiagramm der Fig. 6 dargestellt ist.

In einem ersten Block 50 ist dargestellt, daß im i-ten Meßzyklus ein bestimmter Istwert des Grundkreisdurchmessers $d_{G\ ist\ i}$ erfaßt wurde, wozu eine der Positionen der Fig. 3 bis 5 und dort jeweils der Meßwert A ausgewertet werden konnte. Durch den zweiten Block 51 in Fig. 6 ist die Frage symbolisiert, ob der so gemessene Istwert $d_{G\ ist\ i}$ mit einem vorgegebenen Sollwert $d_{G\ soll}$ übereinstimmt. Wenn dies nicht der Fall ist, wird im dritten Block 52 die Differenz $\Delta\ d_G$ gebildet und im vieren Block 53 wird diese Differenz $\Delta\ _G$ gewichtet, indem sie mit einem konstanten Faktor K multipliziert wird, wobei der konstante Faktor K zwischen 0,5 und 1,5 liegt. Das Ergibnis ist ein Korrekturwert $\Delta x$, der einem Ausgangssollwert $x_{a\ soll}$ hinzugefügt oder von diesem abgezogen wird, so daß sich ein neuer Ausgangssollwert $x_{a\ soll}$ für den Verschiebeweg des Schleifschlittens 15 ergibt.

Fig. 7 zeigt hierzu in entsprechender Weise das Vorgehen, wenn man statt des Grundkreismessers $d_G$ den Grundkreisdurchmesser $d_G$ und Erhebungswert E wählt. Die Vorgehensweise entspricht vollkommen derjenigen, wie sie anhand Fig. 6 erläutert wurde und es sind entsprechende Blöcke jeweils mit einem a gekennzeichnet.

Fig. 8 zeigt schließlich in einem Weg/Zeit-Digram, wie die Schleifscheibe 16 entlang der X-Achse 18 vorrückt und nach und nach den Schleifvorgang durchführt.

Ein Ausgangspunkt, d.h. ein erstes Rohmaß ist mit der gestrichelten Linie 60 und dem ersten Arbeitspunkt 61 symbolisiert. Vom ersten Arbeitspunkt 61 wird nun der Schleifschlitten 15 mit der Schleifscheibe 16 auf die C-Achse 3 zubewegt, wobei der zweite Arbeitspunkt 62, der dritte Arbeitspunkt 63 und der vierte Arbeitspunkt 64 mit den davorliegenden Plateaus die verschiedenen Grob- und Feinschlifschritte symbolisieren. Nach Verlassen des vierten Arbeitspunkts 64 wird bei 65 das vorgegebene Sollmaß erreicht. Dieser letzte Schleifschritt dauert in der beispielhaften Darstellung der Fig. 8 bis zu einer Zeit von 12 Sekunden an, in der der fünfte Arbeitspunkt 66 erreicht und ein Schleifintervall 67 insgesamt abgeschlossen ist.

In einem nachfolgenden Meßintervall 68 wird nun in der bereits geschilderten Weise (Darstellung zu Fig. 3 bis 5) die Kontur des Nockens 11 vermessen, während die Schleifscheibe 16 beispielsweise in der X-Position des fünften Arbeitspunkts 66 verbleibt.

Am Ende des Meßintervalls 68 wird die Schleifscheibe von einem sechsten Arbeitspunkt 69 in einem Korrekturintervall 70 wieder auf einen siebten Arbeitspunkt 71 zurückgesteuert, der in X-Richtung vom ersten Rohmaß 60 gerade einen Abstand $\Delta x$ aufweist, der dem Korrekturwert entspricht, so wie er in einem der anhand der Fig. 6 oder 7 erläuterten Verfahren ermittelt wurde.

Auf diese Weise ergibt sich ein zweites Rohmaß 72, das beim Beispielsfall der Fig. 8 kleiner ist als das erste Rohmaß 60, so daß der zweite zu bearbeitende Nocken 11b sowie alle weiteren Nokken 11c, 11d ... ausgehend von dem korrigierten zweiten Rohmaß 72 bearbeitet werden.

Während sich die Verfahrensschritte der Fig. 8 abspielen, können unterschiedliche Verstellungen der Nockenschleifmaschine 1 vorgesehen sein.

Bei einer ersten Variante des erfindungsgemäßen Verfahrens wird die Messung der Kontur des Nockens 11 dadurch eingeleitet, daß mittels des zweiten Antriebssystems 28 die Profilmeßeinrichtung 25 an den Nocken 11 herangefahren wird, während die letzte Umdrehung des Nockens 11 kurz vor Erreichen des fünften Arbeitspunkts 66 am Ende des Schleifintervalls 67 abgewickelt wird. Unmittelbar anschließend wird bei sich weiterdrehendem Nocken 11 die erforderliche Messung vorgenommen, der Schleifschlitten 15 zieht sich zurück, wie in Fig. 8 mit dem sechsten Arbeitspunkt 69 und dem siebten Arbeitspunkt 71 angedeutet, während gleichzeitig eine in der Zeichnung nicht dargestellte Verschiebeeinrichtung die Nockenwelle 2 "taktet", d.h. in der Darstellung der Fig. 2 um einen Nockenabstand nach links verschiebt, so daß nun die Schleifscheibe in Flucht mit dem nächsten zu bearbeitenen Nocken 11a, 11b ... ist.

Bei einer anderen Variante des erfindungsgemäßen Verfahrens wird hingegen bei Erreichen des sechsten Arbeitspunkte 69 die Schleifscheibe 16 vom Nocken 11 weg gefahren und der Nocken 11 wird durch definierten Verdrehen in eine Meß-Drehlage gebracht, wie sie beispielsweise einer der Fig. 3 bis 5 zu entnehmen ist. Auch in diesem Falle wird die Profil-Meßeinrichtung 25 durch Betätigen des zweiten Antriebssystems 28 zunächst an den Nocken 11 heran- und dann wieder von diesem weggefahren.

Die Schleifscheibe 16, die bei dieser Variante des erfindungsgemäßen Verfahrens beispielsweise auf die Position des ersten Rohmaßes 60 zurückgenommen wurde, kann nun, während gleichzeitig die Nockenwelle 2 getastet und der Korrekturwert $\Delta x$ berechnet wurde, um diesen Korrekturwert $\Delta x$ in der siebten Arbeitspunkt 71 auf das zweite Rohmaß 72 gefahren werden.

**Patentansprüche**

1. Verfahren zum Schleifen von zwei oder mehr Nocken (11) einer Nockenwelle (2) mit den Verfahrensschritten:
   - Einspannen der Nockenwelle (2) in einer Aufspannung zwischen einem um eine erste Achse (C-Achse 3) drehbaren Mitnehmer (5) eines Werkstückspindelstocks (4) und einem Reitstock (6);

- Drehen der Nockenwelle (2) in definierter Drehwinkel-Zeitabhängigkeit;
- Verschieben einer rotierenden Schleifscheibe (16) in Richtung einer zweiten Achse (X-Achse 18), die auf der ersten Achse (C-Achse 3) senkrecht steht, auf einen ersten zu schleifenden Nocken (11) zu;
- Einstellung des Drehwinkels und des Verschiebeweges (X) der Schleifscheibe (16) in Abhängigkeit von in einer numerischen Steuereinheit (39) vorgegebenen Polarkoordinaten einer Soll-Kontur des Nockens (11), während sich die Schleifscheibe (16) in Eingriff am Nocken (11) befindet;
- Erfassen einer Abweichung von einem Verfahrens-Soll-Wert;
- Korrigieren des vorgegebenen Verschiebeweges ($X_{soll}$) um einen der gewichteten Abweichung entsprechenden Korrekturwert ($\Delta x$),
  dadurch gekennzeichnet, daß
- der Grundkreisdurchmesser ($d_G$) oder die Summe von Grundkreisdurchmesser ($d_G$) und maximalem Erhebungswert (E) der geschliffenen Kontur des Nockens (11) gemessen wird;
- eine Abweichung ($\Delta d_G$ oder $\Delta (d_G + E)$) zwischen diesem beim Messen ermittelten Meßwert ($d_{Gist}$, $(d_G + E)_{ist}$) und Soll-Werten ($d_{Gsoll}$, $(d_G + E)_{soll}$) ermittelt wird;
- der Soll-Wert des Verschiebeweges (x) um die mit einem Korrekturfaktor (K) gewichtete Abweichung ($\Delta x = K \cdot \Delta d_G$; $x = K \cdot \Delta (d_G + E)$) korrigiert wird; und
- anschließend ein zweiter sowie weitere Nocken (11a, 11b, 11c, 11d ...) in derselben Aufspannung geschliffen wird.

2. Verfahren nach Anspruch 1, dadurch gekennzeichnet, daß der erste Nocken (11) nach vollständigem Schleifen mittels Drehen des Mitnehmers (5) in eine vorbestimmte Drehlage gebracht wird, und daß die Meßwerte ($d_{Gist}$, $d_{Gist} + E$) in dieser vorbestimmten Drehlage mittels Meßtastern (26, 27) bestimmt werden.

3. Verfahren nach Anspruch 1, dadurch gekennzeichnet, daß der erste Nocken (11) nach vollständigem Schleifen mittels des Mitnehmers (5) um vorzugsweise 360° gedreht wird, wobei Meßtaster (26, 27) während des Drehens an der geschliffenen Kontur anliegen, und daß die Meßwerte ($d_{Gist}$, $d_{Gist} + E$) aus dem zeitlichen Verlauf des Signals der Meßtaster (26, 27) ermittelt werden.

4. Verfahren nach einem der Ansprüche 1 bis 3, dadurch gekennzeichnet, daß der vorgegebene Verfahrweg ($x_{soll}$) um den Korrekturwert ($\Delta x$) korrigiert wird, während ein zweiter zu schleifender Nocken (11a) und die Schleifscheibe (16) in eine miteinander fluchtende Lage gebracht werden.

**Claims**

1. A method of grinding two ore more cams (11) of a camshaft (2) comprising the steps of:
   - chucking the camshaft (2) in a chuck between a dog (5) of a workpiece spindle stock (4) rotatable about a first axis (C-axis 3) and a headstock (6);
   - rotating the camshaft (2) in a predetermined rotary angle vs. time dependency;
   - displacing a rotating grinding wheel (16) along a second axis (X-axis 18) extending perpendicularly to the first axis (C-axis 3) towards a first-to-grind cam (11);
   - setting the rotary angle and the displacement (x) of the grinding wheel (16) as a function of polar coordinates of a nominal contour of the cam (11) given by a numeric control (39), while the grinding wheel (16) is in engagement with the cam (11);
   - determining a deviation from a nominal process value;
   - correcting the predetermined displacement ($x_{soll}$) by a correction value ($\Delta x$), characterized in that
   - the base circle diameter ($d_G$) or the sum of base circle diameter ($d_G$) and maximum elevation value (E) of the ground contour of the cam (11) are measured ;
   - a deviation ($\Delta d_G$ or $\Delta (d_G + E)$) between this measured value ($d_{Gist}$, $(d_G + E)_{ist}$) detected during measuring and nominal values ($d_{Gsoll}$, $(d_G + E)_{soll}$) is determined;
   - the nominal value of the displacement (x) is corrected by the deviation ($\Delta X = K \Delta d_G$; $\Delta X = K \Delta (d_G + E)$) weighted by a correction factor (K); and
   - a second as well as further cams (11a, 11b, 11c, 11d...) are ground subsequently in the same chuck.

2. The method of claim 1, characterized in that the first cam (11) after having been entirely ground, is brought into a predetermined rotary position by rotating the dog (5) and that the measured values ($d_{Gist}$, $d_{Gist} + E$) are determined in this peredetermined rotary position by means of measuring calipers (26, 27).

3. The method of claim 1, characterized in that the first cam (11) after having been entirely ground is rotated by, preferably, 360° by means of the dog (5) while measuring calipers (26, 27) engage the ground contour during rotation, and that the measured values ($d_{Gist}$) ($d_{Gist}$ + E) are determined from the signal vs. time function of the measuring calipers (26, 27).

4. The method of any of claims 1 through 3, characterized in that the predetermined displacement ($x_{soll}$) is corrected by the correction value ($\Delta x$) while a second-to-grind cam (11a) and the grinding wheel (16) are brought into a flush position.

**Revendications**

1. Procédé pour meuler deux cames (11) ou plus d'un arbre à cames (2) selon les étapes de procédé suivantes :
   - serrage de l'arbre à cames (2) dans un dispositif de serrage entre un entraîneur (5) tournant autour d'un premier axe (axe C 3) d'une tête porte-pièce (4) et une contre-pointe (6) ;
   - rotation de l'arbre à cames (2) suivant une relation définie angle de rotation-temps ;
   - déplacement d'un disque de meulage (16) tournant en direction d'un deuxième axe (axe X 18) qui est perpendiculaire au premier axe (axe C 3), vers une première came (11) à meuler ;
   - réglage de l'angle de rotation et de la distance de déplacement (X) du disque de meulage (16) en fonction de coordonnées polaires, données dans une unité de commande numérique (39), d'un contour de consigne de la came (11), tandis que le disque de meulage (16) agit sur la came (11) ;
   - enregistrement d'un écart par rapport à une valeur de consigne de procédé ;
   - correction de la distance de déplacement imposée ($X_{soll}$) d'une valeur de correction ($\Delta x$) correspondant à l'écart pondéré, caractérisé en ce que
   - le diamètre du cercle de base ($d_G$) ou la somme du diamètre du cercle de base ($d_G$) et de la valeur du relief maximal (E) du contour meulé de la came (11), est mesuré ;
   - l'écart ($\Delta d_G$ ou $\Delta(d_G$ + E)) entre cette valeur déterminée lors de la mesure ($d_{Gist}$, ($d_G$ + E)$_{ist}$) et les valeurs de consigne ($d_{Gsoll}$, ($d_G$ + E)$_{soll}$), est déterminé ;

   - la valeur de consigne de la distance de déplacement (x) est corrigée de l'écart, pondéré par un facteur de correction (K) ($\Delta x = K . \Delta d_G$ ; $x = K . \Delta (d_G + E)$); et
   - une deuxième ainsi que d'autres cames (11a, 11b, 11c, 11d ...) sont ensuite meulées dans le même dispositif de serrage.

2. Procédé selon la revendication 1, caractérisé en ce que la première came (11) est amenée, après meulage complet, par rotation de l'entraîneur (5), dans une position de rotation prédéterminée et en ce que les valeurs de mesure ($d_{Gist}$, $d_{Gist}$ + E) sont déterminées dans cette position de rotation prédéterminée, au moyen de palpeurs de mesure (26, 27).

3. Procédé selon la revendication 1, caractérisé en ce que la première came (11), après meulage complet, est tournée de préférence de 360°, au moyen de l'entraîneur (5), les palpeurs de mesure (26, 27) s'appliquant contre le contour meulé pendant la rotation et en ce que les valeurs de mesure ($d_{Gist}$, $d_{Gist}$ + E) sont déterminées à partir de la variation dans le temps du signal des palpeurs de mesure (26, 27).

4. Procédé selon l'une des revendications 1 à 3, caractérisé en ce que la distance de déplacement imposée ($x_{soll}$) est corrigée de la valeur de correction ($\Delta x$), tandis qu'une deuxième came (11a) à meuler et le disque de meulage (16) sont amenés dans une position alignée entre eux.

Fig.1

Fig. 2

Fig. 3

Fig. 4

Fig.5

Fig. 8

Fig.7

50a $(d_G + E)_{ist\,i}$

51a $(d_G + E)_{soll} \neq (d_G + E)_{ist\,i}$ — Nein / Ja

52a $\Delta(d_G + E) = (d_G + E_{ist\,i}) - (d_G + E_{soll})$

54a $0,5 < K > 1,5$

53a $\Delta X = K \cdot \Delta(d_G + E)$

55a $X'_{a\,soll} = X_{a\,soll} \pm \Delta X$

Fig.6

50 $d_G\,ist\,i$

51 $d_{G\,soll} \neq d_{G\,ist\,i}$ — Nein / Ja

52 $\Delta d_G = d_{G\,ist\,i} - d_{G\,soll}$

54 $0,5 < K > 1,5$

53 $\Delta X = K \cdot \Delta d_G$

55 $X'_{a\,soll} = X_{a\,soll} \pm \Delta X$

11